(19) Europäisches Patentamt
European Patent Office
Office européen des brevets

(11) **EP 3 595 923 B1**

(12) **EUROPÄISCHE PATENTSCHRIFT**

(45) Veröffentlichungstag und Bekanntmachung des Hinweises auf die Patenterteilung:
**11.10.2023 Patentblatt 2023/41**

(21) Anmeldenummer: **18723425.7**

(22) Anmeldetag: **20.04.2018**

(51) Internationale Patentklassifikation (IPC):
**B60L 3/10** (2006.01) **B60L 15/20** (2006.01)
**B61C 15/14** (2006.01) **B60L 9/16** (2006.01)

(52) Gemeinsame Patentklassifikation (CPC):
**B60L 3/10; B60L 15/20; B61C 9/38; B61C 15/14; F16D 48/06;** B60L 9/16; B60L 2200/26; B60L 2220/42; B60L 2240/421; B60L 2240/507; F16D 2500/30406; F16D 2500/30415; F16D 2500/30426; F16D 2500/3108; F16D 2500/5102; (Forts.)

(86) Internationale Anmeldenummer:
**PCT/EP2018/060177**

(87) Internationale Veröffentlichungsnummer:
**WO 2018/210527 (22.11.2018 Gazette 2018/47)**

(54) **VERFAHREN UND VORRICHTUNG ZUR ÜBERWACHUNG EINES ANTRIEBSSYSTEMS**

METHOD AND DEVICE FOR MONITORING A DRIVE SYSTEM

PROCÉDÉ ET DISPOSITIF DE SURVEILLANCE D'UN SYSTÈME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2017 DE 102017208157**

(43) Veröffentlichungstag der Anmeldung:
**22.01.2020 Patentblatt 2020/04**

(73) Patentinhaber: **Siemens Mobility GmbH**
**81739 München (DE)**

(72) Erfinder: **QIAN, Kai**
**91052 Erlangen (DE)**

(74) Vertreter: **Siemens Patent Attorneys**
**Postfach 22 16 34**
**80506 München (DE)**

(56) Entgegenhaltungen:
EP-A2- 2 202 124      WO-A1-2015/037588
DE-A1- 19 628 789     DE-A1-102006 045 397
FR-A1- 2 697 482      US-B1- 6 223 842

(52) Gemeinsame Patentklassifikation (CPC): (Forts.)
Y02T 10/64; Y02T 10/72

**Beschreibung**

Die vorliegende Erfindung betrifft ein Verfahren zum Überwachen eines Antriebssystems eines Schienenfahrzeugs mit mehreren, durch einen gemeinsamen Frequenzumrichter gespeisten Antriebssträngen. Die Erfindung betrifft ebenfalls eine Vorrichtung zur Überwachung eines Antriebssystems eines Schienenfahrzeugs, welches das erfindungsgemäße Verfahren verwirklicht.

In elektrisch angetriebenen Schienenfahrzeugen mit einer Mehrzahl Antriebssträngen, insbesondere in elektrischen Triebzügen, kann ein Bruch bzw. eine Beschädigung der Kupplung eines Antriebsstrangs auftreten, in dessen Folge die betroffene Achse eines Triebdrehgestells nicht mehr angetrieben wird. Ein solcher Kupplungsbruch wird jedoch mit hoher Wahrscheinlichkeit zunächst nicht bemerkt, da nur ein Teil der Antriebsleistung wegfällt. Insbesondere bei der Speisung einer Mehrzahl Antriebssträngen des Schienenfahrzeugs durch einen gemeinsamen Frequenzumrichter kann es aufgrund des Kupplungsbruchs in einem der Antriebssträngen und der dadurch erfolgenden Umverteilung des geforderten Drehmoments auf die weiteren Antriebssträngen zu einer Überlastung von Komponenten in diesen weiteren Antriebssträngen kommen. Solche Überlastungen führen beispielsweise zu Abregeleingriffen, die entsprechend alle von dem gemeinsamen Frequenzumrichter gespeisten Antriebssträngen betreffen, da der Fahrmotor des betroffenen Antriebsstrangs nicht gesondert abgeregelt werden kann. Sofern eine solche Abregelung nicht zeitnah erfolgt, kann dies nachteilig zu Schäden in Komponenten der Antriebssträngen führen.

EP 2 202 124 A2 offenbart ein Verfahren zur Erkennung einer Unterbrechung des Leistungsflusses in einem Antriebsstrang eines Schienenfahrzeugs.

FR 2 697 482 A1 offenbart ein Verfahren zur Regelung der Geschwindigkeit eines Schienenfahrzeugs.

Aufgabe der vorliegenden Erfindung ist, einen Bruch bzw. eine Beschädigung einer Kupplung in einem Antriebsstrang schnell erkennen zu können, und damit die Möglichkeit zu schaffen, entsprechende Maßnahmen zum Schutz von Komponenten des betroffenen Antriebsstrangs bzw. weiterer Antriebssträngen treffen zu können. Diese Aufgabe wird durch das Verfahren sowie die Vorrichtung gemäß den unabhängigen Patentansprüchen gelöst. Weiterbildungen der Erfindung sind in jeweils abhängigen Patentansprüchen definiert.

Ein erster Aspekt der Erfindung betrifft ein Verfahren zum Überwachen eines Antriebssystems eines Schienenfahrzeugs gemäß Anspruch 1. Dabei weist das Antriebssystem zumindest zwei Antriebssträngen mit jeweils zumindest einem elektrischen Fahrmotor und einer Kupplung, zumindest einen die zumindest zwei Fahrmotoren gemeinsam speisenden Wechselrichter, sowie eine Steuereinrichtung auf. Das erfindungsgemäße Verfahren umfasst zumindest die Schritte, dass für jeden der zumindest zwei Antriebssträngen zumindest eine antriebsseitige Drehzahl und zumindest eine lastseitige Drehzahl der Kupplung erfasst wird, dass zumindest ein Wert eines Schlupfes der Kupplung aus den erfassten Drehzahlen ermittelt wird, und dass der zumindest eine ermittelte Wert des Schlupfes mit einem vorgegebenen Schwellwert verglichen wird.

Vorteilhaft kann durch das erfindungsgemäße Verfahren vergleichsweise schnell ein Vorliegen eines Kupplungsbruchs erkannt werden. Erfindungsgemäß wird abhängig von einem Ergebnis des jeweiligen Vergleichs bei Erkennen eines möglichen Bruchs einer Kupplung zumindest eine Maßnahme zum Schutz des Antriebssystems initiiert, um einen gegebenenfalls durch den Kupplungsbruch bedingten Schaden an weiteren Komponenten des betroffenen Antriebsstrangs oder anderer Antriebssträngen des gleichen Antriebssystems zu verhindern. Vorteilhaft kann weiterhin eine Vereinfachung der Wartung von Antriebssträngen erzielt werden, da ein Bruch, eine Beschädigung bzw. eine Fehlfunktion einer Kupplung eines Antriebsstrangs vergleichsweise einfach erkannt und lokalisiert werden kann.

Gemäß einer Weiterbildung werden die antriebsseitigen und lastseitigen Drehzahlen der zumindest zwei Antriebssträngen jeweils über Sensoren erfasst. Derartige Drehzahlsensoren können dabei bekannte Drehgeber, insbesondere Impulsgeber sein. Die lastseitige Drehzahl kann gemäß einer weiteren Weiterbildung auch aus einer erfassten Geschwindigkeit des Fahrzeugs berechnet werden.

Gemäß einer weiteren Weiterbildung werden zumindest die Schritte des Ermittelns des zumindest einen Wertes des Schlupfes und des Vergleichens des zumindest einen ermittelten Wertes des Schlupfes mit dem vorgegebenen Schwellwert in der Steuereinrichtung verwirklicht.

Gemäß einer weiteren Weiterbildung wird der zumindest eine Wert des Schlupfes eines jeweiligen Antriebsstrangs basierend auf der allgemeinen Gleichung für die Berechnung des Schlupfes durch Berechnung einer Differenz zwischen der antriebsseitigen Drehzahl und der lastseitigen Drehzahl, dividiert durch die antriebsseitige Drehzahl ermittelt.

Gemäß einer weiteren Weiterbildung wird der zumindest eine Wert des Schlupfes eines jeweiligen Antriebsstrangs durch Berechnen eines Mittelwerts oder eines Medians aus mehreren erfassten antriebsseitigen Drehzahlen der Antriebssträngen ermittelt.

Ein zweiter Aspekt der vorliegenden Erfindung betrifft eine Vorrichtung zur Überwachung eines Antriebssystems eines Schienenfahrzeugs gemäß Anspruch 8, wobei das Antriebssystem zumindest zwei Antriebssträngen mit jeweils zumindest einem elektrischen Fahrmotor und einer Kupplung, einen die zumindest zwei Fahrmotoren gemeinsam speisenden Wechselrichter, eine Steuereinrichtung und eine Mehrzahl Sensoren zur Erfassung einer antriebsseitigen Drehzahl und einer lastseitigen Drehzahl der Kupplung eines jeden der zumindest zwei Antriebsstränge auf. Erfindungsgemäß ist die Steuereinrichtung derart ausgestaltet, dass sie für jeden der zumindest zwei Antriebsstränge zumindest einen Wert eines Schlupfes der Kupplung aus den erfassten Drehzahlen ermittelt, und für jeden der zumindest zwei Antriebsstränge den zumindest einen ermittelten Wert des Schlupfes mit einem vorgegebenen Schwellwert vergleicht.

Das Schienenfahrzeug kann als Triebzug ausgestaltet sein, wobei die zumindest zwei Antriebsstränge weiterhin jeweils eine in einem Triebdrehgestell gelagerte Radsatzwelle mit daran angeordneten Rädern bzw. Radscheiben aufweisen können. Erfindungsgemäß sind die zumindest zwei Fahrmotoren der zumindest zwei Antriebsstränge als Drehstrom-Asynchronmaschinen ausgestaltet.

Im Folgenden wird die Erfindung anhand eines Ausführungsbeispiels näher erläutert. Dabei zeigen:

FIG 1    ein Schienenfahrzeug in einer Seitenansicht,
FIG 2    ein Triebdrehgestell in einer Draufsicht,
FIG 3    ein Antriebssystem mit vier Antriebssträngen,
FIG 4    der Verlauf des Schlupfes über die Drehzahl, und
FIG 5    ein Ablaufdiagramm des erfindungsgemäßen Verfahrens.

Aus Gründen der Übersichtlichkeit werden in den Figuren für gleiche bzw. gleich oder nahezu gleich wirkende Komponenten dieselben Bezugszeichen verwendet.

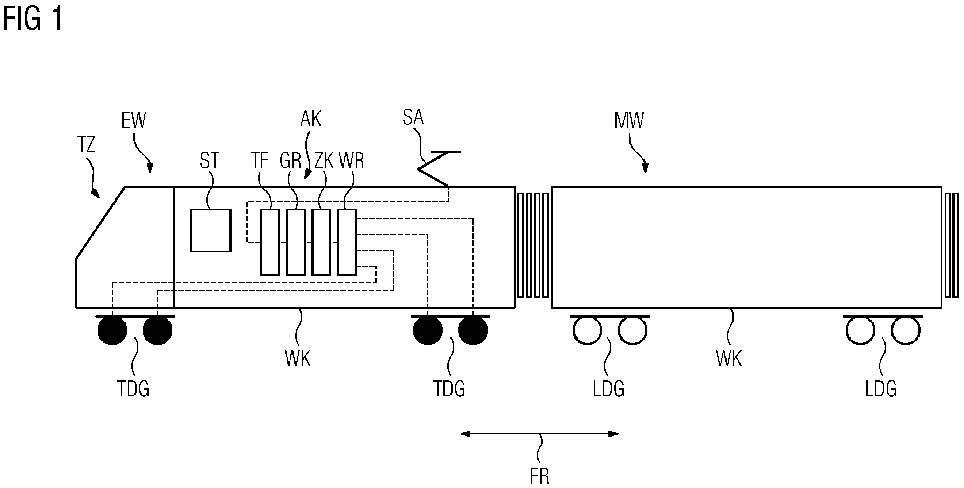

FIG 1 zeigt schematisch ein beispielhaftes Schienenfahrzeug TZ in einer Seitenansicht. Das beispielhaft dargestellte Schienenfahrzeug TZ ist als ein Triebzug für den Personentransport mit einer Mehrzahl Wagen ausgestaltet, wobei lediglich ein erster Wagen in Form eines Endwagens EW sowie ein an den ersten Wagen angekuppelter zweiter Wagen in Form eines Mittelwagens MW dargestellt sind. Die beiden Wagen verfügen jeweils über einen Wagenkasten WK, der sich über Drehgestelle in Form von Triebdrehgestellen TDG bzw.

Laufdrehgestellen LDG auf nicht dargestellten Schienen abstützt. Der Wagenkasten WK des dargestellten Endwagens EW ist beispielhaft in mehrere räumliche Bereiche unterteilt. Diese Bereiche sind zum einen ein Führerraum im vorderen Bereich des Wagenkastens WK, zum anderen ein an den Führerraum angrenzender Fahrgastraum, in dem Sitzmöglichkeiten für Fahrgäste vorgesehen sind. Der mit dem Endwagen EW verkuppelte Mittelwagen MW weist hingegen ausschließlich einen Fahrgastraum auf. Der jeweilige Fahrgastraum der beiden Wagen kann von Fahrgästen über in Seitenwänden des jeweiligen Wagenkastens angeordnete, nicht dargestellte Türen betreten und verlassen werden. Weiterhin können Fahrgäste über einen Wagenübergang in den jeweils benachbarten Wagen gelangen. Derartige Wagenübergänge werden in der Regel durch Wellen- oder Faltenbälge vor Umwelteinflüssen geschützt.

In dem Endwagen EW des beispielhaften Triebzugs TZ der FIG 1 sind weiterhin bekannte Komponenten einer typischen Antriebskette AK eines elektrisch angetriebenen Triebzugs schematisch angegeben. Diese sind dabei lediglich beispielhaft im Bereich des beschriebenen Fahrgastraums des Endwagens EW angeordnet, während diese in der Praxis in bekannter Weise an anderen Stellen des Wagens, beispielsweise in einem speziellen Raum bzw. Bereich innerhalb des Wagenkastens, im Unterflurbereich oder auch im Dachbereich des Wagenkastens angeordnet sein können. Auch eine Verteilung der Komponenten in gleicher Weise wie eine Verteilung der Triebdrehgestelle auf mehrere Wagen ist dabei möglich. Beispielhaft wird hierzu auf das Patent EP2812208B1 verwiesen, in dem Komponenten der Antriebskette über mehrere Wagen eines Schienenfahrzeugs verteilt angeordnet sind.

Über einen beispielhaft im Dachbereich des Wagenkastens des Endwagens EW angeordneten Stromabnehmer SA ist die Antriebskette AK mit einer nicht dargestellten Fahrleitung bzw. Oberleitung in Kontakt, aus der sie beispielsweise eine Einphasenwechselspannung des Bahnversorgungsnetzes bezieht.

Diese Wechselspannung wird, über einen ebenfalls nicht dargestellten Hauptschalter, einer Primärwicklung eines Transformators TF zugeführt, in dem die Hochspannung des Netzes heruntertransformiert wird. Eine Sekundärwicklung des Transformators TF ist mit einem Gleichrichter GR verbunden, in dem die transformierte Wechselspannung gleichgerichtet wird. Dem Gleichrichter GR ist ein Gleichspannungs-Zwischenkreis ZK nachgeschaltet, aus dem wiederum ein Wechselrichter WR gespeist wird. Der Wechselrichter ist dabei beispielsweise als ein Pulswechselrichter mit Schaltelementen, insbesondere IGBT (Insulated Gate Bipolar Transistor) Halbleiterbauteile, ausgeführt. Die beschriebene Kombination aus Gleichrichter, Zwischenkreis und Wechselrichter wird auch als Frequenzumrichter oder Traktionsstromrichter bezeichnet. Deren Funktion ist es allgemein, aus einer Wechselspannung des Netzes eine in der Frequenz und Amplitude veränderbare Dreiphasenwechselspannung zu generieren, mit denen Drehzahl und Drehmoment von Drehstrommotoren bzw. Asynchronmaschinen für die Traktion eines Schienenfahrzeugs geregelt werden können. In dem Beispiel der FIG 1 versorgt der Wechselrichter WR vier in zwei Triebdrehgestellen TDG des Endwagens EW angeordnete Fahrmotoren. Gesteuert wird die Funktion der Komponenten dabei von einer beispielhaft dargestellten Steuereinrichtung ST.

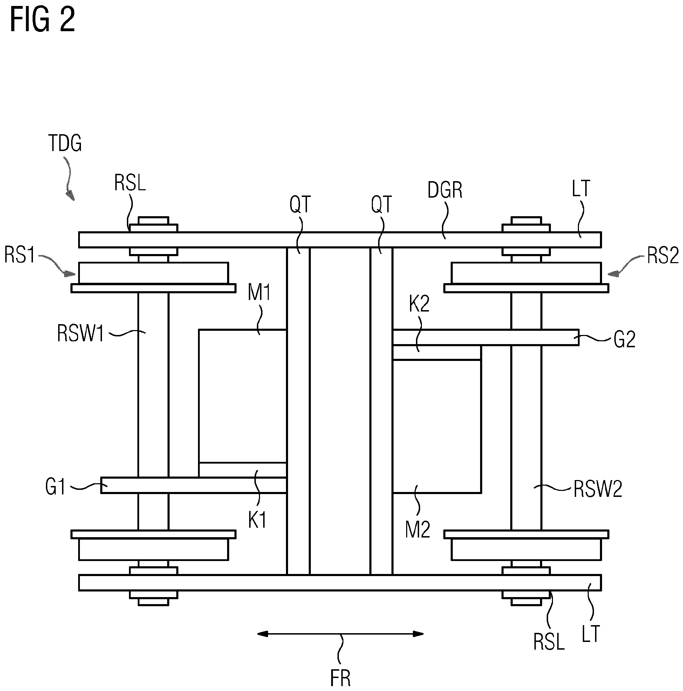

FIG 2 zeigt schematisch ein beispielhaftes Triebdrehgestell TDG in einer Draufsicht. Nach dem Beispiel der FIG 1 stützt sich der Wagenkasten WK des Endwagens EW des Triebzugs TZ auf zwei solchen Triebdrehgestellen TDG ab. Jedes Triebdrehgestell TDG weist zwei Radsätze RS1, RS2 auf, die an einem Drehgestellrahmen DGR mittels Radsatzlager RSL befestigt sind. Der Drehgestellrahmen DGR besteht dabei beispielhaft aus zwei sich in Fahrtrichtung FR des Schienenfahrzeugs parallel erstreckenden Längsträgern LT sowie zwei senkrecht zu diesen ausgerichteten und mit diesen verbundenen Querträgern QT. In dem Beispiel der FIG 2 sind zwei Fahrmotoren M1, M2 jeweils zwischen einem Querträger QT und einer Radsatzwelle RSW eines dem jeweiligen Fahrmotor M1, M2 zugeordneten Radsatzes RS1, RS2 angeordnet und am primär gefederten Drehgestellrahmen DGR befestigt. Die Motorachsen der Fahrmotoren M1, M2 sind somit parallel zur Drehachse des jeweiligen Radsatzes RS1, RS2 und damit quer zur Fahrrichtung FR des Triebzugs ausgerichtet. Eine solche Anordnung ist auch unter dem Begriff Querantrieb bekannt. Das Drehmoment der Fahrmotoren M1, M2 wird jeweils über eine Kupplung K1, K2 sowie eine Getriebeeinheit G1, G2, beispielsweise ein Reduktionsgetriebe bzw. einstufiges Stirnradgetriebe, auf die Radsatzwelle RSW1, RSW2 des zugeordneten Radsatzes RS1, RS2 mechanisch übertragen. Der jeweilige Radsatz ist in der Regel sekundär gefedert und beschränkt beweglich im Grundkörper gelagert. Das Getriebe G1, G2 stützt sich einerseits auf der Radsatzwelle RSW1, RSW2, andererseits über eine Drehmomentstütze an dem Drehgestellrahmen DGR ab. Der Fahrmotor M1, M2 ist somit vollgefedert, während das Getriebe G1, G2 nur teilgefedert ist. Der Kupplung K1, K2 kommt daher ergänzend die Aufgabe zu, Relativbewegungen zwischen Fahrmotor und Getriebe auszugleichen. Hierfür wird insbesondere bei Hochgeschwindigkeits-Triebzügen eine Bogenzahnkupplung eingesetzt, die solche relativen Bewegungen ausgleichen kann. Alternativ zu der in FIG 2 dargestellten Anordnung kann eine mechanische Kopplung der Fahrmotoren mit den Radsatzwellen auch lediglich mittels Kupplungen und ohne zusätzliche Getriebeeinheit erfolgen.

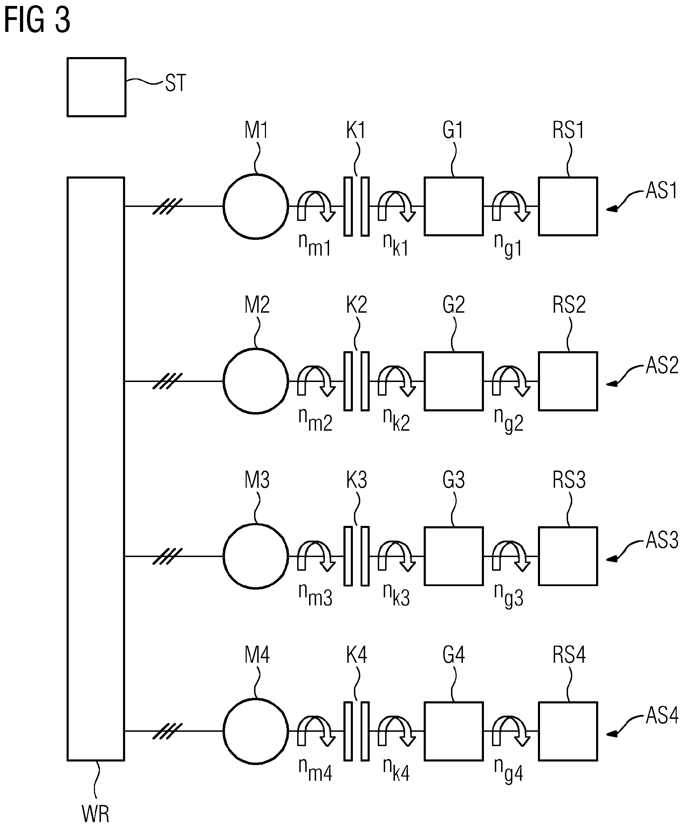

FIG 3 zeigt basierend auf den FIG 1 und FIG 2 schematisch Komponenten eines beispielhaften Antriebssystems mit vier Antriebssträngen, anhand derer die erfindungsgemäße Ermittlung eines Kupplungsbruchs beschrieben wird. Die schematisch dargestellten vier Antriebsstränge AS1-AS4 werden durch einen gemeinsamen Frequenzumrichter, von dem lediglich der Wechselrichter WR entsprechend der FIG 1 dargestellt ist, in bekannter Weise gespeist. Entsprechend vorstehender Beschreibung generiert der gemeinsame Frequenzumrichter, durch die beispielhaft dargestellte Steuereinrichtung ST gesteuert, in der Frequenz und Amplitude veränderbare Dreiphasenwechselspannungen, mit denen Drehzahl und Drehmoment der als Asynchronmaschinen ausgestalteten Fahrmotoren M1-M4 der Antriebsstränge AS1-AS4 gesteuert werden. Die Fahrmotoren M1-M4 sind jeweils über eine Antriebswelle mechanisch mit einer Kupplung K1-K4, beispielsweise einer vorstehend genannten Bogenzahnkupplung, verbunden. Eine jeweilige Abtriebswelle, d.h. lastseitige Welle der Kupplungen K1-K4, deren Verbindung mit der jeweiligen Antriebswelle durch die Kupplungen hergestellt wird, ist wiederum mit einer Eingangsseite eines Getriebes G1-G4 mechanisch verbunden. Die Ausgangsseite des jeweiligen Getriebes G1-G4 ist, wie in FIG 2 dargestellt, mit einem Radsatz RS1-RS4 verbunden.

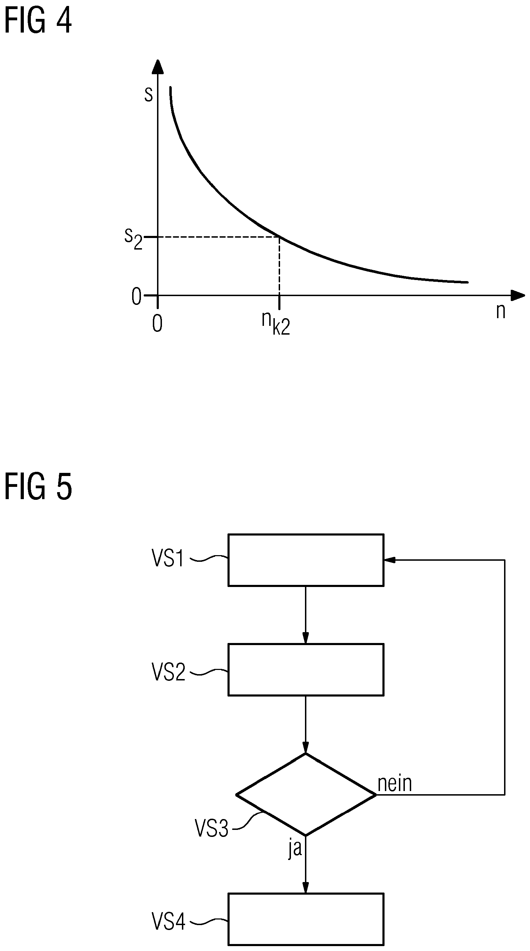

Das Erkennen eines möglichen Bruchs einer der Kupplungen K1-K4 der vier Antriebsstränge AS1-AS4 der FIG 3 erfolgt erfindungsgemäß anhand eines jeweils ermittelten Schlupfes. Bei als Asynchronmaschinen ausgestalteten Fahrmotoren variiert mit der Ausgangsfrequenz des Frequenzumrichters auch die Drehfeld-Frequenz des Ständers der Asynchronmaschine. Ein typischer Verlauf des Schlupfes s über die Drehzahl n einer Asynchronmaschine bei Betrieb durch einen Frequenzumrichter ist in FIG 4 beispielhaft dargestellt. Allgemein bestimmt sich der Schlupf s einer Asynchronmaschine über folgende Gleichung:

$$s = (n_D - n_L) / n_D \qquad (1)$$

wobei $n_D$ die Drehzahl des Drehfeldes und $n_L$ die Drehzahl des Läufers der Asynchronmaschine ist. Aus dem Verlauf ist erkennbar, dass bei niedrigen Drehzahlen n der Schlupf vergleichsweise groß ist, maximal kann der Schlupf s eins betragen, während bei höheren Drehzahlen n der Schlupf s gegen null tendiert.

Die vorstehend erläuterte Gleichung (1) zur Bestimmung des Schlupfes s kann nun dazu verwendet werden, in der Steuereinrichtung ST auf Basis erfasster Drehzahlen den Wert des jeweiligen Schlupfes $S_1$-$S_4$ der Antriebsstränge AS1-AS4 bzw. speziell des jeweiligen Schlupfes der Kupplungen K1-K4 des Antriebsstrangs AS1-AS4 zu ermitteln. Dabei wird anstelle der Drehzahl des Drehfeldes $n_D$ jeweils die antriebsseitige Drehzahl in Form der erfassten Drehzahl $n_{m1}$-$n_{m4}$ der Antriebswelle des Fahrmotors M1-M4 verwendet. Anstelle der Drehzahl $n_L$ des Läufers des Fahrmotors M1-M4 wird hingegen jeweils die lastseitige Drehzahl beispielsweise in Form der erfassten Drehzahl $n_{k1}$-$n_{k4}$ der Abtriebswelle verwendet. Der Schlupf $s_1$ des beispielhaften ersten Antriebsstrangs AS1 kann entsprechend wie folgt berechnet werden:

$$s_1 = (n_{m1} - n_{k1}) / n_{m1} \qquad (2).$$

Alternativ zu der Drehzahl $n_{k1}$-$n_{k4}$ der Abtriebswelle kann als lastseitige Drehzahl auch die Drehzahl $n_{g1}$-$n_{g4}$ am Ausgang des Getriebes G1-G4 oder die Drehzahl der Radsatzwelle RSW des Radsatzes RS1-RS4 bzw. die Drehzahl der Räder verwendet werden, wobei in diesem Fall der existierende Drehzahlunterschied aufgrund der Übersetzung des Getriebes berücksichtigt werden muss. Die Drehzahlen der jeweiligen Wellen werden in bekannter Weise, beispielsweise mittels Drehgeber, insbesondere mittels Impulsgeber, bestimmt.

Bei geschlossener Kupplung, beispielsweise während des normalen Fahrbetriebs des Schienenfahrzeugs, stimmen die antriebsseitigen und lastseitigen Drehzahlen des beispielhaften ersten Antriebsstrangs AS1 aufgrund der formschlüssigen Drehmomentübertragung überein bzw. nahezu überein, $n_{m1} = n_{k1}$. Die vorstehende Gleichung (2) für den ersten Antriebsstrang AS1 ergibt entsprechend einen Wert des Schlupfes $s_1$ von null bzw. nahezu null:

$$s_1 = (n_{m1} - n_{k1}) / n_{m1} = 0 \qquad (3).$$

Kommt es in einem Antriebsstrang, beispielsweise dem in FIG 3 dargestellten zweiten Antriebsstrang AS2, nun zu einem Bruch bzw. einer Beschädigung der Kupplung K2, mit der Folge eines plötzlichen Abbruchs der formschlüssigen Drehmomentübertragung zwischen Antriebswelle und Abtriebswelle, so wird der Fahrmotor M2 des zweiten Antriebsstrangs AS2 plötzlich entlastet. In dessen Folge wird, nach einem kurzen Ausgleichsvorgang, sich der Läufer des zweiten Fahrmotors M2 in einen Leerlauf einpendeln, in welchem die mechanische Drehzahl der Antriebswelle nahezu der Drehzahl des Drehfeldes $n_D$ entspricht, da der zweite Fahrmotor M2 wie die drei weiteren Fahrmotoren M1, M3 und M4 weiterhin von dem Frequenzumrichter gespeist wird. Mangels formschlüssiger Drehmomentübertragung zwischen Antriebs- und Abtriebswelle und aufgrund von Reibung zwischen Schiene und den Rädern des zweiten Radsatzes RS2 sollte prinzipiell die lastseitige Drehzahl des zweiten Antriebsstrangs AS2 auf null abklingen und der Schlupf $s_2$ zwischen antriebsseitiger und lastseitiger Drehzahl gegen den Wert eins tendieren. Bei Schienenfahrzeugen in normalem Fahrbetrieb kommt es jedoch nicht zu einem Stillstand bzw. zu einem Blockieren des betroffenen zweiten Radsatzes RS2, vielmehr wird der zweite Radsatz RS2 zu einem Mitlauf gezwungen und dreht sich weiterhin entsprechend den Radsätzen RS1, RS3, RS4 der weiteren drei Antriebsstränge AS1, AS3, AS4.

Durch diesen Mitlauf des zweiten Radsatzes RS2 klingt die lastseitige Drehzahl $n_{g2}$ des Radsatzes RS2 bzw. die Drehzahl $n_{k2}$ der Abtriebswelle nicht auf null ab, sodass der Wert des Schlupfes $s_2$ zwischen der Drehzahlen der Antriebswelle $n_{m2}$ und der Abtriebswelle $n_{k2}$ des zweiten Antriebsstrangs AS2 gegen den Wert des Schlupfes der Fahrmotoren M1, M3, M4 der weiteren drei Antriebsstränge AS1, AS3, AS4 tendiert. Während sich der Wert des Schlupfes der drei weiteren Antriebsstränge AS1, AS3, AS4 entsprechend der vorstehenden Erläuterung zum ersten Antriebsstrang AS1 bei normalem Fahrbetrieb gegen null tendiert, unterscheidet sich der Wert des Schlupfes $s_2$ des zweiten Antriebsstrangs AS2 mit der beschädigten Kupplung K2 deutlich von null. Diese Unterscheidbarkeit in den Werten des Schlupfes $s_1$-$s_4$ der Antriebsstränge AS1-AS4 ermöglicht das Erkennen des Vorliegens eines Kupplungsbruchs, in dem Beispiel speziell des Bruchs der Kupplung K2 des zweiten Antriebsstrangs AS2.

Für den zweiten Antriebsstrang AS2 gilt die vorstehende Gleichung (2) für die Berechnung des Wertes des Schlupfes $s_2$ entsprechend:

$$s_2 = (n_{m2} - n_{k2}) / n_{m2} \qquad (4).$$

Bei dem beschriebenen Mitlauf des zweiten Radsatzes RS2 entspricht die antriebsseitige Drehzahl $n_{m2}$ nahezu der Drehzahl $n_D$ des Drehfeldes, während die lastseitige Drehzahl $n_{k2}$ nahezu der lastseitigen Drehzahl $n_{k1}$ des ersten Antriebsstrangs AS1 entspricht. Dies resultiert in folgender Abwandlung der Gleichung (4) für den Wert des Schlupfes $s_2$:

$$s_2 \approx (n_D - n_{k1}) / n_D \qquad (5).$$

Der Wert des Schlupfes $s_2$ des zweiten Antriebsstrangs AS2 entspricht bei einer Drehzahl $n_{k2}$ somit ungefähr dem Wert des Schlupfes des ersten Fahrmotors M1 bei einer Drehzahl $n_{m1}$ des Läufers. Dieser Wert $s_2$ ist beispielhaft in FIG 4 angegeben.

Der ermittelte jeweilige Wert des Schlupfes $s_1$-$s_4$ der Antriebsstränge AS1-AS4 wird in der Steuereinrichtung ST beispielsweise mit einem vorgegebenen Schwellwert verglichen. Dieser Schwellwert sollte dabei abhängig von der Frequenz des Drehfeldes der Asynchronmaschine bzw. des Fahrmotors definiert sein, um den vom Hersteller der Asynchronmaschine vorgegebenen Verlauf des Schlupfes über die Frequenz des Drehfeldes zu berücksichtigen.

Ein Überschreiten des vorgegebenen Schwellwertes durch den bestimmten Wert des Schlupfes s, welches gemäß vorstehendem Beispiel für den zweiten Antriebsstrang AS2 der Fall sein sollte, kann dann als Indikator für das Vorliegen eines Bruchs bzw. einer Beschädigung der Kupplung eines Antriebsstrangs verwendet werden. Nach dieser Ermittlung des Vorliegens bzw. wahrscheinlichen Vorliegens eines Kupplungsbruchs können von der Steuereinrichtung ST Maßnahmen zum Schutz des Antriebssystems ergriffen werden. So kann als eine erste beispielhafte Maßnahme der Wechselrichter WR des gemeinsamen Frequenzumrichters derart angesteuert werden, dass dieser die Fahrmotoren M1-M4 aller mit dem Wechselrichter WR verbundener Antriebsstränge AS1-AS4 derart speist, dass die Fahrmotoren M1-M4 kein Moment mehr erzeugen. In Folge dieser ersten Maßnahme werden die Fahrmotoren M1, M3, M4 aufgrund der weiterhin geschlossenen Kupplungen K1, K3, K4 und der damit weiterhin existierenden formschlüssigen Drehmomentübertragung jeweils mit einer Drehzahl laufen, die der aktuellen Drehzahl der nur mehr mitlaufenden Radsätze, unter Berücksichtigung des existierenden Übersetzungsverhältnisses des Getriebes, entspricht. Der Fahrmotor M2 des zweiten Antriebsstrangs AS2 hingegen wird, wie vorstehend beschrieben, mit einer Drehzahl laufen, die nahezu der Drehzahl des Drehfeldes entspricht. Als eine zweite, ergänzende oder alternative beispielhafte Maßnahme kann die Steuereinrichtung ST einen Hinweis an den Führer des Schienenfahrzeugs und/oder an eine zentrale Leitstelle über den bestimmten teilweisen Verlust an Antriebsleistung, vorzugsweise unter Angabe des ermittelten, potenziell beschädigten Antriebsstrangs ausgeben. Ein solcher Hinweis sollte den Fahrzeugführer bzw. Wartungspersonal dazu veranlassen, einen manuellen Eingriff in die Steuerung des Fahrzeugantriebs oder auch eine optische Prüfung speziell der Kupplung bzw. aller Komponenten des betroffenen Antriebsstrangs vorzunehmen.

Die vorstehende Beschreibung basiert auf der Annahme, dass nur einer von mehreren Antriebssträngen einen Schaden aufweist, da ein gleichzeitiger Bruch mehrerer Kupplungen nur mit einer sehr geringen Wahrscheinlichkeit in der Praxis auftritt. Es ist weiterhin zu beachten, dass es für das erfindungsgemäße Erkennen eines Kupplungsbruchs nicht erforderlich ist, dass das Antriebssystem vier von einem gemeinsamen Frequenzumrichter gespeiste Antriebsstränge aufweist. Lediglich die Möglichkeit eines Vergleichs von Schlupfwerten von mindestens zwei Antriebssträngen, die von einem gemeinsamen Frequenzumrichter gespeist werden, muss gegeben sein. Ferner kann bei dem beschriebenen Vergleich des Schlupfes des jeweiligen Antriebsstrangs mit einem Schwellwert der berechnete Schlupf einen Durchschnittswert darstellen, d.h. der Wert des Schlupfes wird aus einer Mittelung mehrerer über einen Zeitraum bestimmter jeweiliger Drehzahlen berechnet. Alternativ kann hierfür auch ein Median aus mehreren jeweils bestimmten Drehzahlen verwendet werden. Vorteilhaft werden hierdurch kurzzeitige Drehzahländerungen, wie sie beispielsweise aufgrund eines kurzzeitigen Durchdrehens der Räder eines Radsatzes, wie es insbesondere bei Beschleunigungsvorgängen auftreten kann, oder aufgrund einer Kurvenfahrt unberücksichtigt bleiben.

FIG 5 zeigt ein schematisches Ablaufdiagramm des vorstehend beschriebenen erfindungsgemäßen Verfahrens für das in den weiteren Figuren beispielhaft dargestellte Antriebssystem. In einem ersten Verfahrensschritt VS1 werden für jeden Antriebsstrang AS1-AS4 antriebsseitige $n_{m1}$-$n_{m4}$ und lastseitige Drehzahlen $n_{k1}$-$n_{k4}$ erfasst. In einem zweiten Verfahrensschritt VS2 wird aus diesen erfassten Drehzahlen Werte eines jeweiligen Schlupfes $s_1$-$s_4$ der Antriebsstränge AS1-AS4 ermittelt. Diese ermittelten Werte des jeweiligen Schlupfes $s_1$-$s_4$ werden in einem dritten Verfahrensschritt VS3 mit einem vorgegebenen Schwellwert verglichen. Sofern das Ergebnis des Vergleichs ist, dass der ermittelte Wert des Schlupfes größer als der vorgegebene Schwellwert ist, wird in einem vierten Verfahrensschritt VS4 zumindest eine Maßnahme zum Schutz des Antriebssystems initiiert. Sofern das Ergebnis des Vergleichs jedoch ist, dass der ermittelte Wert des Schlupfes kleiner als der oder gleich dem Schwellwert ist, so wird keine derartige Maßnahme zum Schutz des Antriebssystems initiiert und die Erfassung der Drehzahlen fortgefahren.

## Patentansprüche

1.  Verfahren zum Überwachen eines Antriebssystems eines Schienenfahrzeugs zur Erkennung eines Bruchs oder einer Beschädigung einer Kupplung (K1-K4) des Antriebssystems, wobei

    das Antriebssystem zumindest zwei Antriebsstränge (AS1-AS4) mit jeweils zumindest einem elektrischen Fahrmotor (M1-M4) und einer Kupplung (K1-K4), zumindest einen die zumindest zwei Fahrmotoren (M1-M4) gemeinsam speisenden Wechselrichter (WR), sowie eine Steuereinrichtung (ST) aufweist, wobei die zumindest zwei Fahrmotoren (M1-M3) als Drehstrom-Asynchronmaschinen ausgestaltet sind, mit den Schritten:

    für jeden der zumindest zwei Antriebsstränge (AS1-AS4) Erfassen zumindest einer antriebsseitigen Drehzahl (nm1-nm4) und zumindest einer lastseitigen Drehzahl ($n_{k1}$-$n_{k4}$, $n_{g1}$-$n_{g4}$) der Kupplung (K1-K4),
    für jeden der zumindest zwei Antriebsstränge (AS1-AS4) Ermitteln zumindest eines Wertes eines Schlupfes ($s_1$-$s_4$) der Kupplung (K1-K4) aus den erfassten Drehzahlen ($n_{m1}$-$n_{m4}$, $n_{k1}$-$n_{k4}$, $n_{g1}$-$n_{g4}$),
    für jeden der zumindest zwei Antriebsstränge (AS1-AS4) Vergleichen des zumindest einen ermittelten Wertes des Schlupfes (s) mit einem vorgegebenen Schwellwert, wobei der Schwellwert abhängig von einer Frequenz eines Drehfeldes des Fahrmotors definiert ist, und
    Initiieren zumindest einer Maßnahme zum Schutz des Antriebssystems abhängig von einem Ergebnis des jeweiligen Vergleichs.

2.  Verfahren nach Anspruch 1, wobei
    die antriebsseitigen ($n_{m1}$-$n_{m4}$) und lastseitigen Drehzahlen ($n_{k1}$-$n_{k4}$, $n_{g1}$-$n_{g4}$) der zumindest zwei Antriebsstränge (AS1-AS4) jeweils über Sensoren erfasst werden.

3. Verfahren nach einem vorstehenden Anspruch, wobei zumindest der Schritt des Ermittelns des zumindest einen Wertes des Schlupfes ($s_1$-$s_4$) und der Schritt des Vergleichens des zumindest einen ermittelten Wertes des Schlupfes ($s_1$-$s_4$) mit dem vorgegebenen Schwellwert in der Steuereinrichtung (ST) verwirklicht werden.

4. Verfahren nach einem vorstehenden Anspruch, wobei der zumindest eine Wert des Schlupfes ($s_1$-$s_4$) eines jeweiligen Antriebsstrangs (AS1-AS4) aus einer Differenz zwischen der antriebsseitigen Drehzahl ($n_{m1}$-$n_{m4}$) und der lastseitigen Drehzahl ($n_{k1}$-$n_{k4}$, $n_{g1}$-$n_{g4}$), dividiert durch die antriebsseitige Drehzahl ($n_{m1}$-$n_{m4}$) ermittelt wird.

5. Verfahren nach einem vorstehenden Anspruch, wobei die lastseitige Drehzahl ($n_{k1}$-$n_{k4}$, $n_{g1}$-$n_{g4}$) aus einer erfassten Geschwindigkeit des Schienenfahrzeugs berechnet wird.

6. Verfahren nach einem vorstehenden Anspruch, wobei der zumindest eine Wert des Schlupfes ($s_1$-$s_4$) eines jeweiligen Antriebsstrangs (AS1-AS4) durch Berechnen eines Mittelwerts oder eines Medians aus mehreren erfassten antriebsseitigen Drehzahlen ($n_{m1}$-$n_{m4}$, $n_{k1}$-$n_{k4}$, $n_{g1}$-$n_{g4}$) der Antriebsstränge (AS1-AS4) ermittelt wird.

7. Verfahren nach einem vorstehenden Anspruch, wobei das Schienenfahrzeug als ein Triebzug (TZ) ausgestaltet ist, wobei die zumindest zwei Antriebsstränge (AS1-AS4) weiterhin jeweils einen in einem Triebdrehgestell (TDG) gelagerten Radsatz (RS1-RS4) mit einer Radsatzwelle (RSW1, RSW2) und daran angeordneten Rädern (R) aufweisen.

8. Vorrichtung zur Überwachung eines Antriebssystems eines Schienenfahrzeugs zur Erkennung eines Bruchs oder einer Beschädigung einer Kupplung (K1-K4) des Antriebssystems, wobei das Antriebssystem zumindest zwei Antriebsstränge (AS1-AS4) mit jeweils zumindest einem elektrischen Fahrmotor (M1-M4) und einer Kupplung (K1-K4),

   einen die zumindest zwei Fahrmotoren (M1-M4) gemeinsam speisenden Wechselrichter (WR), eine Steuereinrichtung (ST) und
   eine Mehrzahl Sensoren zur Erfassung einer antriebsseitigen Drehzahl ($n_{m1}$-$n_{m4}$) und einer lastseitigen Drehzahl ($n_{k1}$-$n_{k4}$, $n_{g1}$-$n_{g4}$) der Kupplung (K1-K4) eines jeden der zumindest zwei Antriebsstränge (AS1-AS4) aufweist, wobei die zumindest zwei Fahrmotoren (M1-M4) der zumindest zwei Antriebsstränge (AS1-AS4) als Drehstrom-Asynchronmaschinen ausgestaltet sind, wobei die Steuereinrichtung (ST) derart ausgestaltet ist, dass sie für jeden der zumindest zwei Antriebsstränge (AS1-AS4) zumindest einen Wert eines Schlupfes ($s_1$-$s_4$) der Kupplung (K1-K4) aus den erfassten Drehzahlen ($n_{m1}$-$n_{m4}$, $n_{k1}$-$n_{k4}$, $n_{g1}$-$n_{g4}$) ermittelt, für jeden der zumindest zwei Antriebsstränge (AS1-AS4) den zumindest einen ermittelten Wert des Schlupfes (s) mit einem vorgegebenen Schwellwert vergleicht und zumindest eine Maßnahme zum Schutz des Antriebssystems abhängig von einem Ergebnis des jeweiligen Vergleichs initiiert.

9. Vorrichtung nach Anspruch 8, wobei das Schienenfahrzeug als ein Triebzug (TZ) ausgestaltet ist.

10. Vorrichtung nach Anspruch 9, wobei die zumindest zwei Antriebsstränge (AS1-AS4) weiterhin jeweils einen in einem Triebdrehgestell (TDG) gelagerten Radsatz (RS1-RS4) mit einer Radsatzwelle (RSW) und daran angeordneten Rädern (R) aufweisen.

**Claims**

1. Method for monitoring a drive system of a rail vehicle to identify a break of or damage to a coupling (K1-K4) of the drive system, wherein

   the drive system has at least two drive trains (AS1-AS4) each with at least one electric drive motor (M1-M4) and a coupling (K1-K4), at least one inverter (WR) feeding the at least two drive motors (M1-M4) together, as well as a control facility (ST), wherein the at least two drive motors (M1-M3) are embodied as three-phase asynchronous machines,
   with the steps:

   for each of the at least two drive trains (AS1-AS4), detecting at least one drive-side rotary speed ($n_{m1}$-$n_{m4}$) and at least one load-side rotary speed ($n_{k1}$-$n_{k4}$, $n_{g1}$-$n_{g4}$) of the coupling (K1-K4),
   for each of the at least two drive trains (AS1-AS4), ascertaining at least one value of a slip ($s_1$-$s_4$) of the coupling (K1-K4) from the detected rotary speeds ($n_{m1}$-$n_{m4}$, $n_{k1}$-$n_{k4}$, $n_{g1}$-$n_{g4}$),

for each of the at least two drive trains (AS1-AS4), comparing the at least one ascertained value of the slip (s) with a predefined threshold value, wherein the threshold value is defined as a function of a frequency of a rotary field of the drive motor, and

initiating at least one measure for protecting the drive system as a function of a result of the respective comparison.

2. Method according to claim 1, wherein
the drive-side ($n_{m1}$-$n_{m4}$) and load-side rotary speeds ($n_{k1}$-$n_{k4}$, $n_{g1}$-$n_{g4}$) of the at least two drive trains (AS1-AS4) are in each case detected via sensors.

3. Method according to a preceding claim, wherein at least the step of the ascertaining of the at least one value of the slip ($s_1$-$s_4$) and the step of the comparing of the at least one ascertained value of the slip ($s_1$-$s_4$) with the predefined threshold value are implemented in the control facility (ST).

4. Method according to a preceding claim, wherein the at least one value of the slip ($s_1$-$s_4$) of a respective drive train (AS1-AS4) is ascertained from a difference between the drive-side rotary speed (nm1-nm4) and the load-side rotary speed ($n_{k1}$-$n_{k4}$, $n_{g1}$-$n_{g4}$), divided by the drive-side rotary speed ($n_{m1}$-$n_{m4}$).

5. Method according to a preceding claim, wherein the load-side rotary speed ($n_{k1}$-$n_{k4}$, $n_{g1}$-$n_{g4}$) is calculated from a detected speed of the rail vehicle.

6. Method according to a preceding claim, wherein
the at least one value of the slip ($s_1$-$s_4$) of a respective drive train (AS1-AS4) is ascertained by calculating an average value or a median from a plurality of detected drive-side rotary speeds ($n_{m1}$-$n_{m4}$, $n_{k1}$-$n_{k4}$, $n_{g1}$-$n_{g4}$) of the drive trains (AS1-AS4).

7. Method according to a preceding claim, wherein
the rail vehicle is embodied as a multiple unit (TZ), wherein the at least two drive trains (AS1-AS4) furthermore in each case have a wheelset (RS1-RS4) mounted in a motor bogie (TDG) with a wheelset shaft (RSW1, RSW2) and wheels (R) arranged thereon.

8. Apparatus for monitoring a drive system of a rail vehicle to identify a break of or damage to a coupling (K1-K4) of the drive system,

wherein the drive system has at least two drive trains (AS1-AS4) each with at least one electric drive motor (M1-M4) and a coupling (K1-K4),
an inverter (WR) feeding the at least two drive motors (M1-M4) together, a control facility (ST) and a plurality of sensors for detecting a drive-side rotary speed ($n_{m1}$-$n_{m4}$) and a load-side rotary speed ($n_{k1}$-$n_{k4}$, $n_{g1}$-$n_{g4}$) of the coupling (K1-K4) of each of the at least two drive trains (AS1-AS4), wherein the at least two drive motors (M1-M4) of the at least two drive trains (AS1-AS4) are embodied as three-phase asynchronous machines, wherein the control facility (ST) is embodied in such a manner that, for each of the at least two drive trains (AS1-AS4) it ascertains at least one value of a slip (s1-s4) of the coupling (K1-K4) from the detected rotary speeds ($n_{m1}$-$n_{m4}$, $n_{k1}$-$n_{k4}$, $n_{g1}$-$n_{g4}$), for each of the at least two drive trains (AS1-AS4) it compares the at least one ascertained value of the slip (s) with a predefined threshold value, and initiates a measure for protecting the drive system as a function of a result of the respective comparison.

9. Apparatus according to claim 8, wherein
the rail vehicle is embodied as a multiple unit (TZ).

10. Apparatus according to claim 9, wherein
the at least two drive trains (AS1-AS4) furthermore in each case have a wheelset (RS1-RS4) mounted in a motor bogie (TDG) with a wheelset shaft (RSW) and wheels (R) arranged thereon.

**Revendications**

1. Procédé de contrôle d'un système d'entraînement d'un véhicule ferroviaire pour la détection d'une rupture ou d'un endommagement d'un accouplement (K1 - K4) du système d'entraînement, dans lequel

le système d'entraînement a au moins deux chaînes (AS1 - AS4) cinématiques ayant chacune au moins un moteur (M1 - M4) électrique de traction et un accouplement (K1 - K4), au moins un onduleur (WR) alimentant conjointement les au moins deux moteurs (M1 - M4) de traction, ainsi qu'un dispositif (ST) de commande, dans lequel les au moins deux moteurs (M1 - M3) de traction sont conformés en machines asynchrones à courant triphasé,
comprenant les stades :

pour chacune des au moins deux chaînes (AS1 - AS4) cinématiques, détection d'au moins une vitesse ($n_{m1}$ - $n_{m4}$) de rotation du côté de l'entraînement et d'au moins une vitesse ($n_{k1}$ - $n_{k4}$, $n_{g1}$ - $n_{g4}$) de rotation du côté de la charge de l'accouplement (K1 - K4),
pour chacune des au moins deux chaînes (AS1 - AS4) cinématiques, détermination d'au moins une valeur d'un glissement ($s_1$ - $s_4$) de l'accouplement (K1 - K4), à partir des vitesses ($n_{m1}$ - $n_{m4}$, $n_{k1}$ - $n_{k4}$, $n_{g1}$ - $n_{g4}$) de rotation détectées,
pour chacune des au moins deux chaînes (AS1 - AS4) cinématiques, comparaison de la au moins une valeur déterminée du glissement (s) à une valeur de seuil donnée à l'avance, dans lequel la valeur de seuil est définie en fonction d'une fréquence d'un champ tournant du moteur de traction, et
lancement d'au moins une mesure de protection du système d'entraînement en fonction d'un résultat de la comparaison respective.

2. Procédé suivant la revendication 1, dans lequel
on détecte, respectivement par des capteurs, les vitesses de rotation du côté de l'entraînement ($n_{m1}$ - $n_{m4}$) et du côté de la charge ($n_{k1}$ - $n_{k4}$, $n_{g1}$ - $n_{g4}$) des au moins deux chaînes (AS1 - AS4) d'entraînement.

3. Procédé suivant l'une des revendications précédentes, dans lequel
on réalise, dans le dispositif (ST) de commande, au moins le stade de la détermination de au moins une valeur du glissement ($s_1$ - $s_4$) et le stade de la comparaison de la au moins une valeur déterminée du glissement ($s_1$ - $s_4$) à la valeur de seuil donnée à l'avance.

4. Procédé suivant l'une des revendications précédentes, dans lequel
on détermine la au moins une valeur du glissement ($s_1$ - $s_4$) d'une chaîne (AS1 - AS4) cinématique respective, à partir d'une différence entre la vitesse ($n_{m1}$ - $n_{m4}$) de rotation du côté de l'entraînement et la vitesse ($n_{k1}$ - $n_{k4}$, $n_{g1}$ - $n_{g4}$) de rotation du côté de la charge divisée par la vitesse ($n_{m1}$ - $n_{m4}$) de rotation du côté de l'entraînement.

5. Procédé suivant l'une des revendications précédentes, dans lequel
on calcule la vitesse ($n_{k1}$ - $n_{k4}$, $n_{g1}$ - $n_{g4}$) de rotation du côté de la charge à partir d'une vitesse détectée du véhicule ferroviaire.

6. Procédé suivant l'une des revendications précédentes, dans lequel
on détermine la au moins une valeur du glissement ($s_1$ - $s_4$) d'une chaîne (AS1 - AS4) cinématique respective, en calculant une valeur moyenne ou une médiane de plusieurs vitesses ($n_{m1}$ - $n_{m4}$, $n_{k1}$ - $n_{k4}$, $n_{g1}$ - $n_{g4}$) de rotation du côté de l'entraînement détectées des chaînes (AS1 - AS4) cinématiques.

7. Procédé suivant l'une des revendications précédentes, dans lequel
le véhicule ferroviaire est conformé en rame (TZ) automotrice, dans lequel les au moins deux chaînes (AS1 - AS4) cinématiques ont en outre chacune un jeu (RS1 - RS4) de roues monté dans un bogie (TDG) moteur ayant un arbre (RSW1, RSW2) de jeu de roues et des roues (R), qui y sont montées.

8. Dispositif de contrôle d'un système d'entraînement d'un véhicule ferroviaire pour la détection d'une rupture ou d'un endommagement d'un accouplement (K1 - K4) du système d'entraînement, dans lequel le système d'entraînement a au moins deux chaînes (AS1 - AS4) cinématiques ayant chacune au moins un moteur (M1 - M4) électrique de traction et un accouplement (K1 - K4),

un onduleur (WR) alimentant conjointement les au moins deux moteurs (M1 - M4) de traction, un dispositif (ST) de commande et
une pluralité de capteurs pour la détection d'une vitesse ($n_{m1}$ - $n_{m4}$) de rotation du côté de l'entraînement et d'une vitesse ($n_{k1}$ - $n_{k4}$, $n_{g1}$ - $n_{g4}$) de rotation du côté de la charge de l'accouplement (K1 - K4) de chacune des au moins deux chaînes (AS1 - AS4) cinématiques, dans lequel les au moins deux moteurs (M1 - M4) de traction des au moins deux chaînes (AS1 - AS4) cinématiques sont conformées en moteurs asynchrones triphasés, dans lequel le dispositif (ST) de commande est conformé de manière à déterminer, pour chacune des au moins deux chaînes (AS1 - AS4) cinématiques, au moins une valeur d'un glissement ($s_1$ - $s_4$) de l'accouplement (K1 - K4) à partir des valeurs ($n_{m1}$ - $n_{m4}$, $n_{k1}$ - $n_{k4}$, $n_{g1}$ - $n_{g4}$) de rotation détectées, pour chacune des au moins deux chaînes (AS1 - AS4) cinématiques, comparer la au moins une valeur déterminée du glissement (s) à une valeur de seuil donnée à l'avance, et lancer au moins une mesure de protection du système d'entraînement en fonction d'un résultat de la comparaison respective.

9. Dispositif suivant la revendication 8, dans lequel le véhicule ferroviaire est conformé en rame (TZ) automotrice.

10. Dispositif suivant la revendication 9, dans lequel les au moins deux chaînes (AS1 - AS4) cinématiques ont en outre chacune un jeu (RS1 - RS4) de roues monté dans un bogie (TDG) moteur ayant un arbre (RSW) de jeu de roues et des roues (R), qui y sont montées.

EP 3 595 923 B1

# FIG 1

# FIG 2

# FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2202124 A2
- FR 2697482 A1

- EP 2812208 B1